# EUROPÄISCHE PATENTSCHRIFT

(11) **EP 3 233 961 B1**
(45) Veröffentlichungstag und Bekanntmachung des Hinweises auf die Patenterteilung: **19.08.2020**
(21) Anmeldenummer: 15834711.2
(22) Anmeldetag: 11.12.2015
(51) Int. Cl.: C08G 59/50, C08K 7/06, C08L 63/00, C08L 65/00

(54) **HOCHTEMPERATURBESTÄNDIGE DUROMERE AUF DER GRUNDLAGE VON NAPHTHALIN-BASIERTEN EPOXIDHARZEN UND CYANATESTERN SOWIE VERBESSERUNG DER SCHLAGZÄHIGKEIT**
HIGH-TEMPERATURE RESISTANT DUROMERS ON THE BASIS OF NAPHTHALENE-BASED EPOXY RESINS AND CYANATE ESTERS, AND IMPROVEMENT OF THE IMPACT STRENGTH
DUROMÈRES RÉSISTANT AUX HAUTES TEMPÉRATURES CONTENANT DES RÉSINES ÉPOXY À BASE DE NAPHTALÈNE ET DES ESTERS DE CYANATE, AINSI QU'AMÉLIORATION DE LA RÉSISTANCE AUX CHOCS

(30) Priorität: 19.12.2014 DE 102014019207
(43) Veröffentlichungstag der Anmeldung: 25.10.2017
(73) Patentinhaber: Airbus Defence and Space GmbH, 85521 Ottobrunn (DE)
(72) Erfinder: MEIER, Christoph, 81739 München (DE); PARLEVLIET, Patricia, 81539 München (DE); DÖRING, Manfred, 76744 Wörth am Rhein (DE)
(74) Vertreter: LKGLOBAL Lorenz & Kopf PartG mbB Patentanwälte
(86) Internationale Anmeldenummer: PCT/DE2015/100531
(87) Internationale Veröffentlichungsnummer: WO 2016/095903

(56) Entgegenhaltungen:
- WO-A2-2014/049028

## Beschreibung

Die vorliegende Anmeldung beansprucht die Priorität der deutschen Patentanmeldung Nr. 10 2014 019 207.5, eingereicht am 19. Dezember 2014, deren Inhalt hierin durch Referenz inkorporiert wird.

Die vorliegende Erfindung betrifft eine polymerisierbare Duromer-Zusammensetzung, ein polymerisiertes Duromer, ein Verfahren zur Herstellung des polymerisierten Duromers sowie die Verwendung der polymerisierbaren Duromer-Zusammensetzung zur Herstellung von konstruktiven Leichtbauteilen, vorzugsweise Kohlefaser-Verbundwerkstoffe (CFK) und ein konstruktives Leichtbauteil, vorzugsweise Kohlefaser-Verbundwerkstoff (CFK), enthaltend das polymerisierte Duromer.

### Hintergrund der Erfindung

Heutige kommerziell eingesetzte duromere Materialsysteme besitzen Glasübergangstemperaturen von üblicherweise maximal 180°C und werden auf der Basis von Epoxidharzen dargestellt. Die Glasübergangstemperaturen von 180°C sind jedoch für viele Anwendungen, vor allem unter erhöhten thermischen und mechanischen Belastungen zu gering. Andere kommerziell erhältliche Materialien für Anwendungen unter erhöhten Temperaturen wie beispielsweise BMI oder Polyimid-Harze sind dagegen entweder toxisch oder sehr teuer und daher für eine kommerzielle Anwendung nicht geeignet. Cyanatester besitzen wiederum eine enorm hohe Glasübergangstemperatur von bis zu 400°C. Dies ist auf die hohe Vernetzungsdichte des Duromernetzwerks zurückzuführen, woraus jedoch auch eine sehr hohe Sprödigkeit des Materials resultiert. Aufgrund dieser Sprödigkeit findet diese Art von Duromersystem bisher in der Luftfahrt keinen kommerziellen Einsatz. Zusätzlich erfordern Cyanatestersysteme meist eine Aushärtungstemperatur von mehr als 200°C, was die Wirtschaftlichkeit dieser Systeme weiterhin einschränkt. Zudem sind die meist verwendeten Härter gesundheitlich bedenklich.

Eine Vielzahl von Cyanatester (CE)/Epoxid-Kombinationen sind bisher bekannt. Beispielsweise beschreiben US Patent 5,494,981; US 2012/0309923; JP2009013205 (A); und C.-S. Wang, M.C. Lee: Synthesis, characterisation and properties of multifunctional naphthalenecontaining epoxy resins cured with cyanate ester, Journal of applied polymer science 73 (1999) 1611-1622, CE/Epoxid-Mischungen, die mit Hilfe von verschiedenen Härtern, beziehungsweise Katalysatoren dargestellt werden. Dabei kommen vor allem Nonylphenol/Übergangsmetallkatalystoren sowie Bronstedt-Säuren und Amine zum Einsatz. Übergangsmetallkatalysatoren sind meist nicht in der Harzmatrix löslich, daher werden Phenole, wie beispielsweise Nonylphenol als Co-Katalysator eingesetzt. Nicht nur, dass die gesundheitstechnischen Aspekte der eingesetzten Übergangsmetallkatalysatoren bedenklich sind, ist Nonylphenol als "substance of very high concern" (SVHC) seit Dezember 2012 bei REACH gelistet [European Chemical Agency, Support document for identification of 4-Nonylphenol branched and linear, 13th December 2012]. Weiter besteht ein großer Nachteil von Brønstedt-Säuren darin, dass sie meist auf der Basis von Wasser vorliegen. Da Cyanatester in Kombination mit Wasser zur Bildung von Carbamaten neigen, welche bei erhöhten Temperaturen zu CO₂ und Aminen degradieren und auf diesem Weg die Leistungsfähigkeit des Materials einschränken, ist von dem Einsatz dieser Katalysatoren abzusehen.

Die WO 2014/049028 A2 offenbart eine polymerisierbare Duromer-Zusammensetzung zur Herstellung von Verbundstoffen enthaltend unter anderem ein Naphthalin-basiertes Epoxidharz, ein aromatisches Diamin sowie gegebenenfalls ein Cyanesterharz.

Weiterhin beschreiben beispielsweise JP 08-176274 (A); JP 2010-059363; C.-S. Wang, M.C. Lee: Synthesis, characterisation and properties of multifunctional naphthalenecontaining epoxy resins cured with cyanate ester, Journal of applied polymer science 73 (1999) 1611-1622, Materialien aus Cyanatestern und Naphthalin-basierten Epoxiden. Die in JP 08-176274 (A) eingesetzten Naphthalin-basierten Epoxide sind niedermolekular und difunktionell, was bedeutet, dass ein Naphthalinmolekül maximal zwei Glycidylether-Funktionalitäten besitzt. Durch diese niedrige Funktionalisierung des Naphthalin-Gerüsts ergibt sich nur eine, im Vergleich zu höher funktionalisierten Epoxiden geringe Vernetzungsdichte. Eine niedrige Vernetzungsdichte bedeutet wiederum eine geringere Temperaturstabilität (Tg) und höhere Wasseraufnahme, jedoch auch eine geringere Sprödigkeit. Die in JP 2010-059363 verwendeten Epoxide zur Darstellung von CE/Epoxid-Materialien sind Präpolymere auf der Basis von Polyphenylenether mit einer Naphthalin-Funktionalität im Polymerrückgrat. Diese Präpolymere besitzen nur eine Glycidylether-Funktionalität pro Wiederholungseinheit, was wiederum zu einer niedrigen Vernetzungsdichte führt. Zudem wird durch die eingeführte Polyphenylenether-Gruppe die molekulare Beweglichkeit des Polymerrückgrats im Gegensatz zu einem reinen Naphthalin-Rückgrat erhöht. Dies könnte zwar die mechanischen Eigenschaften des Materials verbessern, würde allerdings zu einem Abfall der thermischen Eigenschaften (Tg) führen. Bei Wang et. al. werden niedermolekulare tetrafunktionale naphthalin-basierte Epoxide in CE/Epoxid-Mischungen eingesetzt. Der Vorteil dieser tetraglycidylether-Naphthaline liegt in der enorm hohen Vernetzungsdichte des resultierenden Duromernetzwerks und den daraus resultierenden guten thermischen sowie hygrothermalen Eigenschaften des Materials. Ein zu großer Abfall des Tg durch das Hinzumischen des Epoxids zu dem Cyanateser kann auf diese Weise vermieden werden. Der Härteprozess in dieser Veröffentlichung wurde mit Hilfe von Nonylphenol/Kupfer(II)acetylacetonat durchgeführt, die bereits oben erläutert absolut vermieden werden sollten.

Es wäre somit wünschenswert eine polymerisierbare Duromer-Zusammensetzung bereitzustellen, die hochtemperaturbeständig und bezüglich der Schlagfestigkeit modifiziert ist und bei moderaten Temperaturen ausgehärtet werden kann sowie keine wasserbasierten Verbindungen wie beispielsweise Brønstedt-Säuren oder gesundheitlich bedenklichen Härter oder Katalysatoren wie beispielsweise Übergangsmetallkatalysatoren enthält. Des weiteren ist es wünschenswert eine polymerisierbare Duromer-Zusammensetzung bereitzustellen, die zur Herstellung von konstruktiven Leichtbauteilen wie beispielsweise Kohlefaser-Verbundwerkstoffe (CFK) geeignet ist.

Aufgabe der vorliegenden Erfindung ist es daher, eine polymerisierbare Duromer-Zusammensetzung zur Verfügung zu stellen, die im ausgehärteten Zustand hochtemperaturbeständig ist und insbesondere, im Vergleich zu reinen Epoxidharzen eine erhöhte Temperaturbeständigkeit aufweist. Ferner ist eine Aufgabe der vorliegenden Erfindung, dass die polymerisierbare Duromer-Zusammensetzung im ausgehärteten Zustand eine hohe Glasübergangstemperatur aufweist, insbesondere eine Glasübergangstemperatur, die im Vergleich zu bisher bekannten CE/Epoxid-Kombinationen erhöht ist. Des Weiteren ist eine Aufgabe der vorliegenden Erfindung, dass die polymerisierbare Duromer-Zusammensetzung im ausgehärteten Zustand eine hohe Schlagfestigkeit aufweist, insbesondere eine Schlagfestigkeit, die im Vergleich zu reinen CE/Epoxid-Kombinationen verbessert ist. Ferner ist eine Aufgabe der vorliegenden Erfindung, dass die polymerisierbare Duromer-Zusammensetzung bei moderaten Temperaturen ausgehärtet werden kann und insbesondere, im Vergleich zu reinen Cyanatestern, eine geringere Aushärtetemperatur aufweist. Des Weiteren ist eine Aufgabe der vorliegenden Erfindung, dass die polymerisierbare Duromer-Zusammensetzung eine, im Vergleich zu reinen Cyanatestern, verbesserte Hydrolysebeständigkeit aufweist. Ferner ist eine Aufgabe der vorliegenden Erfindung, dass die polymerisierbare Duromer-Zusammensetzung, dass keine gesundheitlich bedenklichen Härter und/oder Katalysatoren eingesetzt werden.

Diese Aufgaben werden durch die in den Ansprüchen definierten Gegenstände gelöst. Vorteilhafte Ausführungsformen sind Gegenstand von Unteransprüchen.

### Zusammenfassung der Erfindung

Ein erster Gegenstand der vorliegenden Erfindung ist dementsprechend eine polymerisierbare Duromer-Zusammensetzung gemäß Anspruch 1, umfassend
a) ein di- oder polyfunktionelles organisches Cyanatesterharz,
b) ein naphthalin-basiertes Epoxidharz, und
c) mindestens ein aromatisches Diamin.

Die erfindungsgemäße polymerisierbare Duromer-Zusammensetzung ist im ausgehärteten Zustand hochtemperaturbeständig und weist insbesondere, im Vergleich zu reinen Epoxidharzen eine erhöhte Temperaturbeständigkeit auf. Ein weiterer Vorteil ist, dass die erfindungsgemäße polymerisierbare Duromer-Zusammensetzung im ausgehärteten Zustand eine hohe Glasübergangstemperatur aufweist, die insbesondere im Vergleich zu bisher bekannten CE/Epoxid-Kombinationen erhöht ist. Ein weiterer Vorteil ist, dass die erfindungsgemäße polymerisierbare Duromer-Zusammensetzung im ausgehärteten Zustand eine hohe Schlagfestigkeit aufweist, insbesondere eine Schlagfestigkeit, die im Vergleich zu reinen CE/Epoxid-Kombinationen verbessert ist. Ein weiterer Vorteil ist, dass die erfindungsgemäße polymerisierbare Duromer-Zusammensetzung bei moderaten Temperaturen ausgehärtet werden kann, die insbesondere, im Vergleich zu reinen Cyanatestern, geringer ist. Ein weiterer Vorteil ist, dass die erfindungsgemäße polymerisierbare Duromer-Zusammensetzung eine, im Vergleich zu reinen Cyanatestern, verbesserte Hydrolysebeständigkeit aufweist. Ein weiterer Vorteil ist, dass die erfindungsgemäße polymerisierbare Duromer-Zusammensetzung keine gesundheitlich bedenklichen Härter und/oder Katalysatoren enthält.

Erfindungsgemäß ist das di- oder polyfunktionelle organische Cyanatesterharz ein Cyanat der Formel (I): 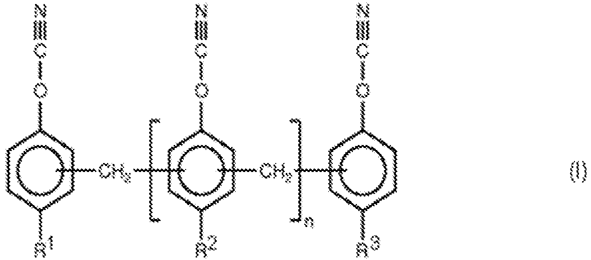 wobei R¹, R² und R³ unabhängig voneinander Wasserstoff oder C₁-C₁₀-Alkyl sind und n eine ganze Zahl von 0 bis 20 darstellt.

Beispielsweise ist das di- oder polyfunktionelle organische Cyanatesterharz ein Cyanat der Formel (I): 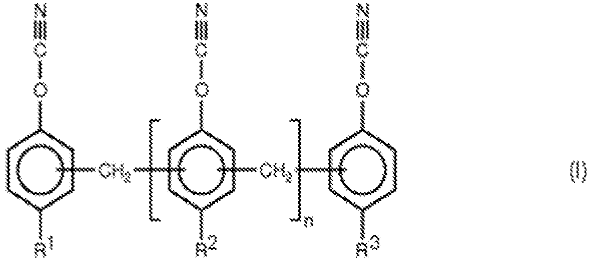 wobei R¹, R² und R³ Wasserstoff sind und n eine ganze Zahl von 0 bis 20 darstellt.

Beispielsweise stellt das naphthalin-basierte Epoxidharz ein polymeres naphthalin-basiertes Epoxidharz dar.

Beispielsweise ist das naphthalin-basierte Epoxidharz ein naphthalin-basiertes Epoxidharz der Formel (II): 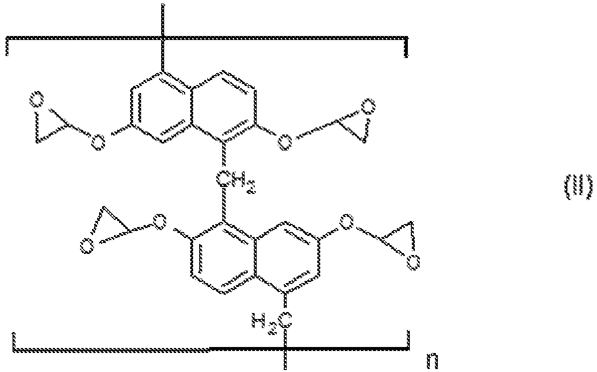 wobei n eine ganze Zahl von 1 bis 50 darstellt.

Beispielsweise enthält die polymerisierbare Duromer-Zusammensetzung das di- oder polyfunktionelle organische Cyanatesterharz und das naphthalin-basierte Epoxidharz in einem Gewichtsverhältnis (Gew./Gew.) von 10:1 bis 1:1 enthält.

Beispielsweise stellt das mindestens eine aromatische Diamin ein aromatisches Diamin ausgewählt aus der Gruppe umfassend 2,4-Toluylen-diamin, 2,6-Toluylen-diamin, 3,5-Diethyl-2,4-toluylen-diamin, 3,5-Diethyl-2,6-toluylendiamin und primäre mono-, di-, tri- oder tetraalkylsubstituierte 4,4'-Diaminodiphenylmethane, 6-Methyl-2,4-bis(methylthio)phenylen-1,3-diamin und 2-Methyl-4,6-bis(methylthio)phenylen-1,3-diamin dar.

Beispielsweise enthält die polymerisierbare Duromer-Zusammensetzung das di- oder polyfunktionelle organische Cyanatesterharz und das aromatische Diamin in einem Gewichtsverhältnis (Gew./Gew.) von 150:1 bis 50:1.

Beispielsweise umfasst die polymerisierbare Duromer-Zusammensetzung mindestens ein Hochleistungsthermoplast, vorzugsweise mindestens ein Hochleistungsthermoplast, das ausgewählt ist aus der Gruppe umfassend Polysulfone (PSU), beispielsweise Polyethersulfone (PES) und Polyphenylensulfone (PPSU), Polyetherimid (PEI), Polysufon (PSU), Polycarbonat (PC), und Mischungen hiervon.

Beispielsweise enthält die polymerisierbare Duromer-Zusammensetzung das di- oder polyfunktionelle organische Cyanatesterharz und das mindestens eine Hochleistungsthermoplast in einem Gewichtsverhältnis (Gew./Gew.) von 100:1 bis 6:1 enthält und/oder die polymerisierbare Duromer-Zusammensetzung das naphthalin-basierte Epoxidharz und das mindestens eine Hochleistungsthermoplast in einem Gewichtsverhältnis (Gew./Gew.) von 50:1 bis 3:1.

Die vorliegende Erfindung stellt ferner ein polymerisiertes Duromer zur Verfügung, das ein Reaktionsprodukt der polymerisierbaren Duromer-Zusammensetzung, wie hierin beschrieben, darstellt.

Beispielsweise weist das polymerisierte Duromer eine Glasübergangstemperatur von 285 °C bis 300 °C auf.

Die vorliegende Erfindung stellt ferner ein Verfahren zur Herstellung des polymerisierten Duromers zur Verfügung, das Verfahren umfasst die Schritte
i) Bereitstellung einer polymerisierbaren Duromer-Zusammensetzung, wie hierin beschrieben, und
ii) Polymerisation der polymerisierbaren Duromer-Zusammensetzung bei Temperaturen in einem Bereich von 100 bis 180 °C.

Ferner betrifft die vorliegende Erfindung die Verwendung der polymerisierbaren Duromer-Zusammensetzung, wie hierin beschrieben, zur Herstellung von konstruktiven Leichtbauteilen, vorzugsweise Kohlefaser-Verbundwerkstoffe (CFK).

Ebenso betrifft die vorliegende Erfindung ein konstruktives Leichtbauteil, vorzugsweise Kohlefaser-Verbundwerkstoff (CFK), enthaltend das polymerisierte Duromer, wie hierin beschrieben.

### Detaillierte Beschreibung der Erfindung

Die vorliegende Erfindung betrifft eine polymerisierbare Duromer-Zusammensetzung gemäß Anspruch 1, umfassend
a) ein di- oder polyfunktionelles organisches Cyanatesterharz,
b) ein naphthalin-basiertes Epoxidharz, und
c) mindestens ein aromatisches Diamin.

Der Begriff "polymerisierbar" bedeutet, dass sich die einzelnen Komponenten der Zusammensetzung unter geeigneten Bedingungen, wie z.B. erhöhter Temperatur oder mit Hilfe von Katalysatoren, polymerisieren lassen.

Der Begriff "Duromer" bezieht sich auf ein Prepolymer, der sich nach seiner Aushärtung bzw. Polymerisierung nicht mehr verformen lässt.

Ein Erfordernis der vorliegenden Erfindung ist, dass die polymerisierbare Duromer-Zusammensetzung ein di- oder polyfunktionelles organisches Cyanatesterharz umfasst.

Erfindungsgemäß werden di- oder polyfunktionelle organische Cyanatesterharze der Formel (I) eingesetzt: 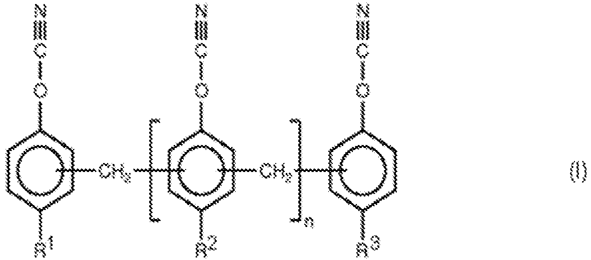 wobei R¹, R² und R³ unabhängig voneinander Wasserstoff oder C₁-C₁₀-Alkyl sind und n eine ganze Zahl von 0 bis 20 darstellt.

Der Begriff "Alkyl" bezeichnet ein Radikal einer gesättigten aliphatischen Gruppe, einschließlich linearer Alkylgruppen und verzweigter Alkylgruppen, wobei die linearen Alkylgruppen und verzweigten Alkylgruppen vorzugsweise nicht substituiert sind.

In einer Ausführungsform der vorliegenden Erfindung ist das di- oder polyfunktionelle organische Cyanatesterharz ein Cyanat der Formel (I), wobei R¹, R² und R³ unabhängig voneinander Wasserstoff oder C₁-C₁₀-Alkyl sind und n eine ganze Zahl von 0 bis 10 darstellt. Vorzugsweise ist das di- oder polyfunktionelle organische Cyanatesterharz ein Cyanat der Formel (I), wobei R¹, R² und R³ unabhängig voneinander Wasserstoff oder C₁-C₁₀-Alkyl sind und n eine ganze Zahl von 1 bis 5 darstellt.

Die Methylengruppe in Formel (I) kann jeweils in ortho- oder para-Position zur Cyanatgruppe stehen. Vorzugsweise steht die Methylengruppe in Formel (I) jeweils in ortho-Position zur Cyanatgruppe.

Beispielsweise ist das di- oder polyfunktionelle organische Cyanatesterharz ein Cyanat der Formel (I), wobei R¹, R² und R³ Wasserstoff oder C₁-C₁₀-Alkyl sind und n eine ganze Zahl von 0 bis 20 darstellt. Alternativ ist das di- oder polyfunktionelle organische Cyanatesterharz ein Cyanat der Formel (I), wobei R¹, R² und R³ Wasserstoff oder C₁-C₁₀-Alkyl sind und n eine ganze Zahl von 0 bis 10 darstellt. Vorzugsweise ist das di- oder polyfunktionelle organische Cyanatesterharz ein Cyanat der Formel (I), wobei R¹, R² und R³ Wasserstoff oder C₁-C₁₀-Alkyl sind und n eine ganze Zahl von 1 bis 5 darstellt. Beispielsweise ist das di- oder polyfunktionelle organische Cyanatesterharz ein Cyanat der Formel (I), wobei R¹, R² und R³ Wasserstoff oder C₁-C₁₀-Alkyl sind und n eine ganze Zahl von 1 bis 5 darstellt und die Methylengruppe jeweils in ortho-Position zur Cyanatgruppe steht.

In einer Ausfuhrungsform der vorliegenden Erfindung ist das di- oder polyfunktionelle organische Cyanatesterharz ein Cyanat der Formel (I); 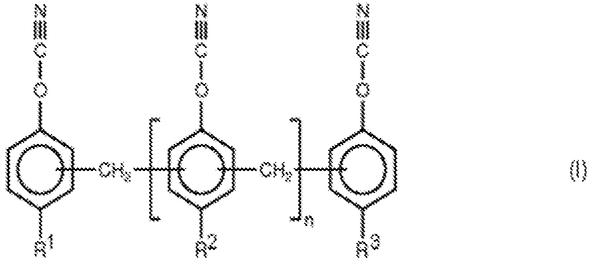 wobei R¹, R² und R³ Wasserstoff sind und n eine ganze Zahl von 0 bis 20 darstellt.

Beispielsweise ist das di- oder polyfunktionelle organische Cyanatesterharz ein Cyanat der Formel (I), wobei R¹, R² und R³ Wasserstoff sind und n eine ganze Zahl von 0 bis 10 darstellt. Vorzugsweise ist das di- oder polyfunktionelle organische Cyanatesterharz ein Cyanat der Formel (I), wobei R¹, R² und R³ Wasserstoff sind und n eine ganze Zahl von 1 bis 5 darstellt.

In einer Ausführungsform der vorliegenden Erfindung ist das di- oder polyfunktionelle organische Cyanatesterharz ein Cyanat der Formel (I), wobei R¹, R² und R³ Wasserstoff sind und n 1, 2 oder 3 darstellt. Beispielsweise ist das di- oder polyfunktionelle organische Cyanatesterharz ein Cyanat der Formel (I), wobei R¹, R² und R³ Wasserstoff sind und n 1, 2 oder 3 darstellt und die Methylengruppe jeweils in ortho-Position zur Cyanatgruppe steht.

Die genannten di- oder polyfunktionellen organischen Cyanatesterharze der Formel (I) können als Monomere oder als Prepolymere, allein oder in Mischungen untereinander eingesetzt werden.

Die polymerisierbare Duromer-Zusammensetzung umfasst das di- oder polyfunktionelle organische Cyanatesterharz vorzugsweise in einer Menge von beispielsweise 50 bis 80 Gew.-% oder 55 bis 75 Gew.-%, bezogen auf das Gesamtgewicht der Zusammensetzung. Alternativ umfasst die polymerisierbare Duromer-Zusammensetzung das di- oder polyfunktionelle organische Cyanatesterharz vorzugsweise in einer Menge von beispielsweise 55 bis 70 Gew.-% oder 60 bis 65 Gew.-%, bezogen auf das Gesamtgewicht der Zusammensetzung.

Ein weiteres Erfordernis der vorliegenden Erfindung ist, dass die polymerisierbare Duromer-Zusammensetzung ein naphthalin-basiertes Epoxidharz umfasst.

Prinzipiell kann jedes naphthalin-basierte Epoxidharz eingesetzt werden. Vorzugsweise werden jedoch naphthalin-basierte Epoxidharze eingesetzt, die vier Glycidylether-Funktionalitäten pro Wiederholungseinheit aufweisen. Diese hohe Anzahl von Glycidylether-Funktionalitäten ist insbesondere vorteilhaft um ein Duromer mit hoher Vernetzungsdichte zu erhalten.

In einer Ausführungsform der vorliegenden Erfindung ist das naphthalin-basierte Epoxidharz ein polymeres naphthalin-basiertes Epoxidharz.

Beispeilsweise ist das naphthalin-basierte Epoxidharz ein naphthalin-basiertes Epoxidharz der Formel (II): 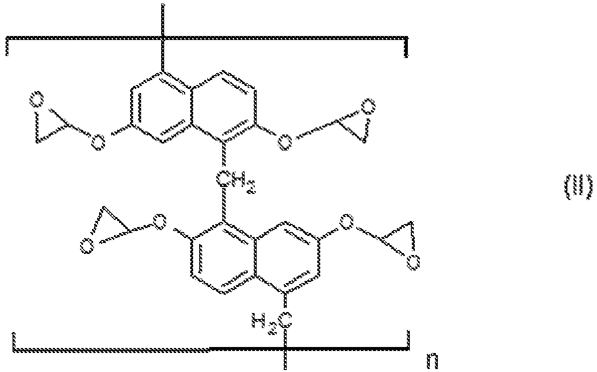 wobei n eine ganze Zahl von 1 bis 50 darstellt.

Vorzugsweise ist das naphthalin-basierte Epoxidharz ein naphthalin-basiertes Epoxidharz der Formel (II), wobei n eine ganze Zahl von 1 bis 40 oder 1 bis 20 darstellt. Alternativ ist das naphthalin-basierte Epoxidharz ein naphthalin-basiertes Epoxidharz der Formel (II), wobei n eine ganze Zahl von 1 bis 10 oder 1 bis 5 darstellt.

Die genannten naphthalin-basierten Epoxidharze der Formel (II) können als Monomere oder als Prepolymere, allein oder in Mischungen untereinander eingesetzt werden.

Die polymerisierbare Duromer-Zusammensetzung umfasst das naphthalin-basierte Epoxidharz vorzugsweise in einer Menge von beispielsweise 19.9 bis 48 Gew.-% oder 24.8 bis 43.5 Gew.-%, bezogen auf das Gesamtgewicht der Zusammensetzung. Alternativ umfasst die polymerisierbare Duromer-Zusammensetzung das naphthalin-basierte Epoxidharz vorzugsweise in einer Menge von beispielsweise 29.6 bis 43.8 Gew.-% oder 29.6 bis 35 Gew.-%, bezogen auf das Gesamtgewicht der Zusammensetzung.

Um ein polymerisiertes Duromer mit hoher Temperaturbeständigkeit zu erhalten, ist es vorteilhaft, wenn die polymerisierbare Duromer-Zusammensetzung das di- oder polyfunktionelle organische Cyanatesterharz und das naphthalin-basierte Epoxidharz in einem bestimmten Gewichtsverhältnis enthält.

Vorzugsweise enthält die polymerisierbare Duromer-Zusammensetzung das di- oder polyfunktionelle organische Cyanatesterharz und das naphthalin-basierte Epoxidharz daher in einem Gewichtsverhältnis (Gew./Gew.) von 10:1 bis 1:1. Beispielsweise enthält die polymerisierbare Duromer-Zusammensetzung das di- oder polyfunktionelle organische Cyanatesterharz und das naphthalin-basierte Epoxidharz in einem Gewichtsverhältnis (Gew./Gew.) von 7:1 bis 1:1 oder von 5:1 bis 1:1. In einer Ausführungsform der vorliegenden Erfindung enthält die polymerisierbare Duromer-Zusammensetzung das di- oder polyfunktionelle organische Cyanatesterharz und das naphthalin-basierte Epoxidharz in einem Gewichtsverhältnis (Gew./Gew.) von ungefähr 2:1.

In einer Ausfuhrungsform der vorliegenden Erfindung, weist das naphthalin-basierte Epoxidharz einen EEW von 100 bis 500 g/eq, vorzugsweise von 125 bis 300 g/eq und ganz besonders bevorzugt von 150 bis 200 g/eq.

Die erfindungsgemäße polymerisierbare Duromer-Zusammensetzung enthält vorzugsweise keine gesundheitlich bedenklichen Härter und/oder Katalysatoren. Es ist daher ein weiteres Erfordernis der vorliegenden Erfindung, dass die polymerisierbare Duromer-Zusammensetzung mindestens ein aromatisches Diamin als Härter umfasst.

Die erfindungsgemäße polymerisierbare Duromer-Zusammensetzung umfasst, vorzugsweise enthält, als Härter ein aromatische Diamin. Die Verwendung eines aromatischen Diamins als Härter in der erfindungsgemäßen polymerisierbaren Duromer-Zusammensetzung hat den Vorteil, dass die polymerisierbare Duromer-Zusammensetzung bei moderaten Temperaturen ausgehärtet werden kann. Insbesondere weist die erfindungsgemäße polymerisierbare Duromer-Zusammensetzung eine im Vergleich zu reinen Cyanatestern geringere Aushärtetemperatur auf.

Das mindestens eine aromatische Diamin stellt vorzugsweise ein aromatisches Diamin ausgewählt aus der Gruppe umfassend 2,4-Toluylen-diamin, 2,6-Toluylen-diamin, 3,5-Diethyl-2,4-toluylen-diamin, 3,5-Diethyl-2,6-toluylendiamin und primäre mono-, di-, tri- oder tetraalkylsubstituierte 4,4'-Diaminodiphenylmethane, 6-Methyl-2,4-bis(methylthio)phenylen-1,3-diamin und 2-Methyl-4,6-bis(methylthio)phenylen-1,3-diamin dar.

Die polymerisierbare Duromer-Zusammensetzung umfasst das Diamin vorzugsweise in einer Menge von beispielsweise 0.1 bis 2 Gew.-% oder 0.2 bis 1.5 Gew.-%, bezogen auf das Gesamtgewicht der Zusammensetzung. Alternativ umfasst die polymerisierbare Duromer-Zusammensetzung umfasst das aromatische Diamin vorzugsweise in einer Menge von beispielsweise 0.4 bis 1.2 Gew.-% oder 0.5 bis 1 Gew.-%, bezogen auf das Gesamtgewicht der Zusammensetzung.

In einer Ausführungsform der vorliegenden Erfindung enthält die polymerisierbare Duromer-Zusammensetzung das di- oder polyfunktionelle organische Cyanatesterharz und das aromatische Diamin in einem Gewichtsverhältnis (Gew./Gew.) von 150:1 bis 50:1. Beispeilsweise enthält die polymerisierbare Duromer-Zusammensetzung das di- oder polyfunktionelle organische Cyanatesterharz und das aromatische Diamin in einem Gewichtsverhältnis (Gew./Gew.) von 125:1 bis 75:1 oder von 115:1 bis 85:1. Vorzugsweise enthält die polymerisierbare Duromer-Zusammensetzung das di- oder polyfunktionelle organische Cyanatesterharz und das aromatische Diamin in einem Gewichtsverhältnis (Gew./Gew.) von ungefähr 100:1.

Zusätzlich oder alternativ enthält die polymerisierbare Duromer-Zusammensetzung das naphthalin-basiertes Epoxidharz und das aromatische Diamin in einem Gewichtsverhältnis (Gew./Gew.) von 100:1 bis 10:1. Beispielsweise enthält die polymerisierbare Duromer-Zusammensetzung das naphthalin-basiertes Epoxidharz und das aromatische Diamin in einem Gewichtsverhältnis (Gew./Gew.) von 85:1 bis 20:1 oder von 75:1 bis 25:1. Vorzugsweise enthält die polymerisierbare Duromer-Zusammensetzung das naphthalin-basiertes Epoxidharz und das aromatische Diamin in einem Gewichtsverhältnis (Gew./Gew.) von ungefähr 50:1.

Um ein polymerisiertes Duromer mit hoher Schlagfestigkeit zu erhalten, ist es vorteilhaft, wenn die polymerisierbare Duromer-Zusammensetzung mindestens ein Hochleistungsthermoplast umfasst.

Ein "Hochleistungsthermoplast" im Sinne der vorliegenden Erfindung ist ein Thermoplast, mit dem die Schlagfestigkeit des polymerisierten Duromers modifiziert werden kann, vorzugsweise erhöht werden kann.

In einer Ausführungsform der vorliegenden Erfinding umfasst die polymerisierbare Duromer-Zusammensetzung daher
a) ein di- oder polyfunktionelles organisches Cyanatesterharz,
b) ein naphthalin-basiertes Epoxidharz,
c) mindestens ein aromatisches Diamin, und
d) mindestens ein Hochleistungsthermoplast.

Vorzugsweise enthält die polymerisierbare Duromer-Zusammensetzung
a) ein di- oder polyfunktionelles organisches Cyanatesterharz,
b) ein naphthalin-basiertes Epoxidharz,
c) mindestens ein aromatisches Diamin, und
d) mindestens ein Hochleistungsthermoplast.

Beispielsweise umfasst die polymerisierbare Duromer-Zusammensetzung mindestens ein Hochleistungsthermoplast ausgewählt aus der Gruppe umfassend Polysulfone (PSU), beispielsweise Polyethersulfone (PES) und Polyphenylensulfone (PPSU), Polyetherimid (PEI), Polysulfon (PSU), Polycarbonat (PC) und Mischungen hiervon. Vorzugsweise umfasst die polymerisierbare Duromer-Zusammensetzung Polyethersulfone (PES) und/oder Polyetherimid (PEI) als Hochleistungsthermoplast. Beispielsweise umfasst die polymerisierbare Duromer-Zusammensetzung Polyethersulfone (PES) und Polyetherimid (PEI) als Hochleistungsthermoplast. Alternativ umfasst die polymerisierbare Duromer-Zusammensetzung Polyethersulfone (PES) oder Polyetherimid (PEI) als Hochleistungsthermoplast.

Die polymerisierbare Duromer-Zusammensetzung umfasst das mindestens eine Hochleistungsthermoplast vorzugsweise in einer Menge von beispielsweise 0.1 bis 15 Gew.-% oder 0.5 bis 12.5 Gew.-%, bezogen auf das Gesamtgewicht der Zusammensetzung. Alternativ umfasst die polymerisierbare Duromer-Zusammensetzung das mindestens eine Hochleistungsthermoplast vorzugsweise in einer Menge von beispielsweise 1 bis 12 Gew.-% oder 2 bis 11 Gew.-%, bezogen auf das Gesamtgewicht der Zusammensetzung.

Um ein polymerisiertes Duromer mit hoher Schlagfestigkeit zu erhalten, ist es vorteilhaft, wenn die polymerisierbare Duromer-Zusammensetzung die Mischung aus di- oder polyfunktionellem organischem Cyanatesterharz und naphthalin-basiertem Epoxidharz und das mindestens eine Hochleistungsthermoplast in einem bestimmten Gewichtsverhältnis enthält.

Beispielsweise enthält die polymerisierbare Duromer-Zusammensetzung die Mischung aus di- oder polyfunktionellem organischem Cyanatesterharz und naphthalin-basiertem Epoxidharz und das mindestens eine Hochleistungsthermoplast in einem Gewichtsverhältnis (Gew./Gew.) von 100:1 bis 3:1. In einer Ausführungsform der vorliegenden Erfindung enthält die polymerisierbare Duromer-Zusammensetzung die Mischung aus di- oder polyfunktionellem organischem Cyanatesterharz und naphthalin-basiertem Epoxidharz und das mindestens eine Hochleistungsthermoplast in einem Gewichtsverhältnis (Gew./Gew.) von 50:1 bis 3:1 oder von 40:1 bis 5:1. Vorzugsweise enthält die polymerisierbare Duromer-Zusammensetzung die Mischung aus di- oder polyfunktionellem organischem Cyanatesterharz und naphthalin-basiertem Epoxidharz und das mindestens eine Hochleistungsthermoplast in einem Gewichtsverhältnis (Gew./Gew.) von 33:1 bis 10:1.

Der polymerisierbaren Duromer-Zusammensetzung können noch weitere Hilfsmittel und Zusatzstoffe zugesetzt werden. Beispielsweise können der polymerisierbaren Duromer-Zusammensetzung Gleitmittel wie Fettsäureester, deren Metallseifen, Fettsäureamide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische oder organische Füllstoffe zur Beeinflussung mechanischer und/oder dielektrischer Eigenschaften und Verstärkungsmittel zugesetzt werden. Als Verstärkungsmittel können beispielsweise faserartige Verstärkungsmittel wie anorganische Fasern, die nach dem Stand der Technik hergestellt werden, zugesetzt werden. Beispielsweise umfasst die polymerisierbare Duromer-Zusammensetzung Kohlefasern.

Aufgrund der Vorteile, die die polymerisierbare Duromer-Zusammensetzung bietet, betrifft die vorliegende Erfindung auch ein polymerisiertes Duromer, das ein Reaktionsprodukt der polymerisierbaren Duromer-Zusammensetzung, wie hierin beschrieben, darstellt.

Das polymerisierte Duromer bietet den Vorteil, dass es eine hohe Temperaturbeständigkeit aufweist. Insbesondere weist das polymerisierte Duromer eine im Vergleich zu reinen Epoxidharzen erhöhte Temperaturbeständigkeit auf. Des Weiteren weist das polymerisierte Duromer eine hohe Glasübergangstemperatur auf. Insbesondere weist das polymerisierte Duromer eine im Vergleich zu bisher bekannten CE/Epoxid-Kombinationen erhöhte Glasübergangstemperatur auf.

Typischerweise weist das erfindungsgemäße polymerisierte Duromer eine Glasübergangstemperatur von 285 °C bis 300 °C auf.

Zusätzlich oder alterntiv weist das erfindungsgemäße polymerisierte Duromer eine Aushärtetemperatur in einem Bereich von 100 bis 180 °C auf. Vorzugsweise weist das erfindungsgemäße polymerisierte Duromer eine Aushärtetemperatur in einem Bereich von 125 bis 175 °C auf.

In einer Ausführungsform der vorliegenden Erfindung weist das erfindungsgemäße polymerisierte Duromer eine Dichte in einem Bereich von 1.20 bis 1.35 g/cm³ und vorzugsweise in einem Bereich von 1.25 bis 1.30 g/cm³ auf.

Zusätzlich oder alterntiv weist das erfindungsgemäße polymerisierte Duromer eine Wasseraufnahmekapazität in einem Bereich von 1.2 bis 1.35 wt.-%, basierend auf dem Gesamtgewicht des polymerisierten Duromers, auf.

In einer Ausführungsform der vorliegenden Erfindung weist das erfindungsgemäße polymerisierte Duromer eine Degrationstemperatur in einem Bereich von 350 bis 400 °C und vorzugsweise in einem Bereich von 360 bis 380 °C auf.

Ein weiterer Aspekt der vorliegenden Erfindung betrifft ein Verfahren zur Herstellung eines polymerisierten Duromers, wie hierin beschrieben. Das Verfahren umfassend die Schritte
i) Bereitstellung einer polymerisierbaren Duromer-Zusammensetzung, wie hierin beschrieben,
ii) Polymerisation der polymerisierbaren Duromer-Zusammensetzung bei Temperaturen in einem Bereich von 100 bis 180 °C.

Die erfindungsgemäße polymerisierbare Duromer-Zusammensetzung kann im Allgemeinen durch Vermischen des di- oder polyfunktionellen organischen Cyanatesterharzes, des naphthalin-basierten Epoxidharzes, des mindestens einen aromatischen Diamins und optionaler Zusatzstoffe, wie beispielsweise das mindestens eine Hochleistungsthermoplast, bereitgestellt werden. In einer Ausführungsform der vorliegenden Erfindung wird die erfindungsgemäße polymerisierbare Duromer-Zusammensetzung in eine bevorzugte Form oder in einen Hohlraum gegossen und dann dort auspolymerisiert. Die Polymerisation erfolgt bei Temperaturen in einem Bereich von 100 bis 180 °C oder von 125 bis 175 °C, beispielsweise bei ungfähr 150 °C, vorzugsweise für insgesamt 1 bis 10 Stunden oder für 2 bis 5 Stunden. Das Polymerisieren kann in einem einzigen kontinuierlichen Vorgang oder in mehreren verschiedenen und zeitlich getrennten Schritten ausgeführt werden. Vorzugsweise erfolgt das Polymerisieren in einem einzigen kontinuierlichen Vorgang.

In einer Ausführungsform der vorliegenden Erfindung umfasst das Verfahren zur Herstellung eines polymerisierten Duromers einen Nachhärtungs-Schritt iii), in dem das polymerisierte Duromer nachgehärtet wird. Das Nachhärten erfolgt bei Temperaturen in einem Bereich von 200 bis 280 °C oder von 200 bis 250 °C, beispielsweise bei ungfähr 220 °C, vorzugsweise für insgesamt 1 bis 10 Stunden oder für 2 bis 5 Stunden. Das Nachhärten kann in einem einzigen kontinuierlichen Vorgang oder in mehreren verschiedenen und zeitlich getrennten Schritten ausgeführt werden. Vorzugsweise erfolgt das Nachhärten in einem einzigen kontinuierlichen Vorgang.

Aufgrund der Vorteile, die das erfindungsgemäße polymerisierte Duromer bietet, betrifft die vorliegende Erfindung auch die Verwendung der polymerisierbaren Duromer-Zusammensetzung, wie hierin beschrieben, zur Herstellung von konstruktiven Leichtbauteilen, vorzugsweise Kohlefaser-Verbundwerkstoffe (CFK). Beispielsweise wird das polymerisierte Duromer als konstruktives Leichtbauteil in thermisch belasteten und strukturell tragenden Leichtbauteilen verwendet, die erhöhten Temperaturen ausgesetzt sind, beispielsweise Temperaturen von mehr als 200 °C.Insbesondere wird das polymerisierte Duromer als konstruktives Leichtbauteil in der Luft- und Raumfahrt eingesetzt werden. Beispielsweise wird das polymerisierte Duromer als konstruktives Leichtbauteil in Satelliten, Raketen,Luftfahrzeugen, wie Passagierflugzeugen oder Helikoptern, in Schienenfahrzeugen, wie Züge, Wasserfahrzeugen, wie Passagierschiffe, oder Strassenfahrzeugen, wie Autos, verwendet.

Ein weiterer Aspekt der vorliegenden Erfindung betrifft daher ein konstruktives Leichtbauteil, vorzugsweise Kohlefaser-Verbundwerkstoff (CFK), enthaltend das polymerisierte Duromer, wie hierin beschrieben.

Wie vorstehend ausgeführt können durch die erfindungsgemäße polymerisierbare Duromer-Zusammensetzung, polymerisierte Duromere erhalten werden, die hochtemperaturbeständig sind und eine hohe Glasübergangstemperatur und Schlagfestigkeit aufweisen. Ferner kann die erfindungsgemäße polymerisierbare Duromer-Zusammensetzung bei moderaten Temperaturen ausgehärtet werden und weist gleichzeitig eine verbesserte Hydrolysebeständigkeit auf. Des Weiteren enthält die erfindungsgemäße polymerisierbare Duromer-Zusammensetzung keine gesundheitlich bedenklichen Härter und/oder Katalysatoren.

### Kurze Beschreibung der Figuren

Fig. 1 stellt ein DMA Spektrum der Zusammensetzung PT15/HP4710/PEI = (1/0.5)/0.03 dar.
Fig. 2 stellt ein DMA Spektrum der Zusammensetzung PT15/HP4710/PEI = (1/0.5)0.07 dar.
Fig. 3 stellt ein DMA Spektrum der Zusammensetzung PT15/HP4710/PEI = (1/0.5)/0.1 dar.
Fig. 4 stellt ein DMA Spektrum der Zusammensetzung PT15/HP4710/PES = (1/0.5)/0.03 dar.
Fig. 5 stellt ein DMA Spektrum der Zusammensetzung PT15/HP4710/PES = (1/0.5)/0.07 dar.

Nachfolgend wird die Erfindung anhand von Beispielen näher erläutert:

### Beispiele

### 1. Methoden

### a) DSC-Messungen

DSC-Messungen wurden mit Hilfe des Gerätes "DSC Q2000" der Firma TA Instruments angefertigt. Die Spektren wurden mit Hilfe der Software "Thermal Advantage Release 5.4.0" aufgezeichnet und mit der Software "Universal Analysis 2000, Version 4.5A" der Firma TA Instruments ausgewertet. Die Heizrate betrug 5 K/min, bei einer Temperatur von 20°C bis 350°C.

### b) TGA-Messungen

TGA-Messungen wurden mit Hilfe des Gerätes "TGA Q5000" der Firma TA Instruments angefertigt. Die Spektren wurden mit Hilfe der Software "Thermal Advantage Release 5.4.0" aufgezeichnet und mit der Software "Universal Analysis 2000, Version 4.5A" der Firma TA Instruments ausgewertet. Die Heizrate betrug 10 K/min, bei einer Temperatur von 20°C bis 1000°C. Die Messungen wurden jeweils unter Inertgasathmosphäre (N2) und unter Sauertsoffathmosphäre (Raumluft) durchgeführt.

### c) DMA- und Rheologie-Messungen

Viskositätsmessungen und die Bestimmung der Glasübergangstemperaturen (Tg) der Materialien wurden mit Hilfe des Rheometers "Advanced Rheometric Expansion System (ARES)" der Firma *Rheometric Scientific* angefertigt. Zur Auswertung wurde die Software "Rheometric Scientific, Version V6.5.8" verwendet. Die Heizraten betrugen in allen Fällen 3 K/min. Der Glasübergang entspricht dem Maximum der tan(8)-Funktion.

### d) FT-IR Charakterisierung

Die Charakterisieung der Materialien wurde mit Hilfe von FT-IR-Untersuchungen durchgeführt. Die Spektren wurden mit Hilfe des FT-IR-Mikroskops "Nicolet iN10" der Firma Thermos Scientific aufgezeichnet. Gemessen wurde mit Hilfe eines ATR-Kristalls im Frequenzbereich von 500cm-1 bis 4000cm-1, wobei 64 Scans pro Messung aufgenommen werden. Das optische Mikroskop hat eine Auflösung von 25µm x 25µm, das FT-IR Spektrum wird mit einer Auflösung von 8 cm-1 aufgenommen. Zur Auswertung der Spektren wurde das Programm "Omnic 8.1.0.10" der Firma "Thermo Scientific" verwendet.

### e) Dichte

Die Dichte wurde gemäß DIN EN ISO 1183-1 (nach dem Eintauchverfahren - Verfahren A) bestimmt.

### f) Wasseraufnahmekapazität

Die Wasseraufnahme wurde durch 2-wöchiges Einlagern der getesteten Proben in dest. Wasser bei 70°C bestimmt. Die Masse der Prüfkörper wurde vor und nach der Einlagerung bestimmt und dadurch die Wasseraufnahme in % berechnet.

### 2. Eingesetzte Materialien

Primaset ®PT15 (erhältlich von Lonza) ist ein Oligo (3-methylen-1,5-phenylcyanat). Epiclon HP-4710 (erhältlich von DIC Corporation) ist ein Oligo(1,1',5,5'-bis-(2,7-diglycidyloxy-1-naphthyl)methane) mit einem EEW von 170 g/eq.
Polyetherimid (PEI) (erhältlich von Sabic Innovative Plastics (Handelsname: Ultem Resin 1000P)) mit einer Vicat Erweichungstemperatur, Rate A/50, von 215 °C, bestimmt gemäß ISO306.
Polyethersulfon (PSE) (erhältlich von Solvay Specialty Polymers (Handelsname: Veradel® 3600P)) mit einer Glasübergangstemperatur von 220 °C, bestimmt gemä0 ASTM E1356.

### Darstellung der Materialien

### a) Darstellung in Masse

In einem 500 mL Rundkolben wurde Primaset ®PT15 eingewogen und bei 50°C für 2 Stunden entgast. Anschließend wurden 50 Gew.-% (bezogen auf die Gesamtmasse von Primaset ®PT15) Epiclon HP-4710 und der entsprechende Anteil (3 Gew.-%, 7 Gew.-% und 10 Gew.-% bezogen auf die Gesamtmasse von Primaset PT-15 und Epiclon HP-4710) des entsprechenden Hochleistungsthermoplasten Polyetherimid (PEI) bzw. Polyethersulfon (PES) zugegeben, die Mischung mit Hilfe eines Ultra Turrax homogenisiert und bei 50°C weitere 2 Stunden im Vakuum entgast. Anschließend wurde die entsprechende Mischung auf 90°C erwärmt und weitere 3 Stunden im Vakuum entgast. Nachdem die entsprechende Mischung auf Raumtemperatur abgekühlt war, wurden 1 Gew.-% des entsprechenden Diaminhärters (6-Methyl-2,4-bis(methylthio)phenylen-1,3-diamin) zugegeben, die Mischung auf 65°C erwärmt und im Vakuum für 2 Stunden entgast. Anschließend wurde die heiße Mischung in eine auf 70°C erwärmte Aluminiumform gegossen und mit folgendem Härtungszyklus im Umluftofen ausgehärtet:
1. 70°C bis 150°C (Rampe = 2 K/min)
2. 150°C 3h isotherm
3. 150°C bis 30°C (Rampe = 3 K/min)
4. Nachhärten: 220°C für 4h

Der Aushärtegrad wurde anschließend mittels DSC (5 K/min) bestimmt und betrug durchschnittlich 98%.

Die gleichen Tests wurden mit verschiedenen Diaminhärtern (Diethylmethylbenzoldiamin, 2-Methyl-4,6-bis(methylthio)phenylen-1,3-diamin, N,N'-Bis(sec-butylamino)diphenylmethane) durchgeführt. Dabei wurde festgstellt, dass die getesteten Diaminhärter eine ähnliche Reaktivität aufwiesen wie 6-Methyl-2,4-bis(methylthio)phenylen-1,3-diamin. Es ist daher möglich die Materialien mit allen getesteten Diaminen darzustellen.

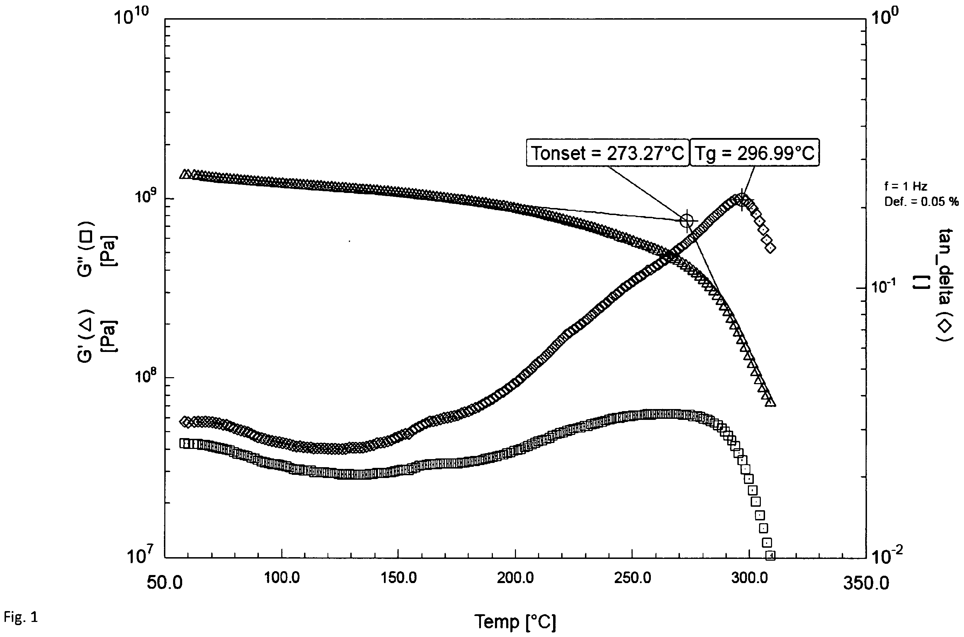

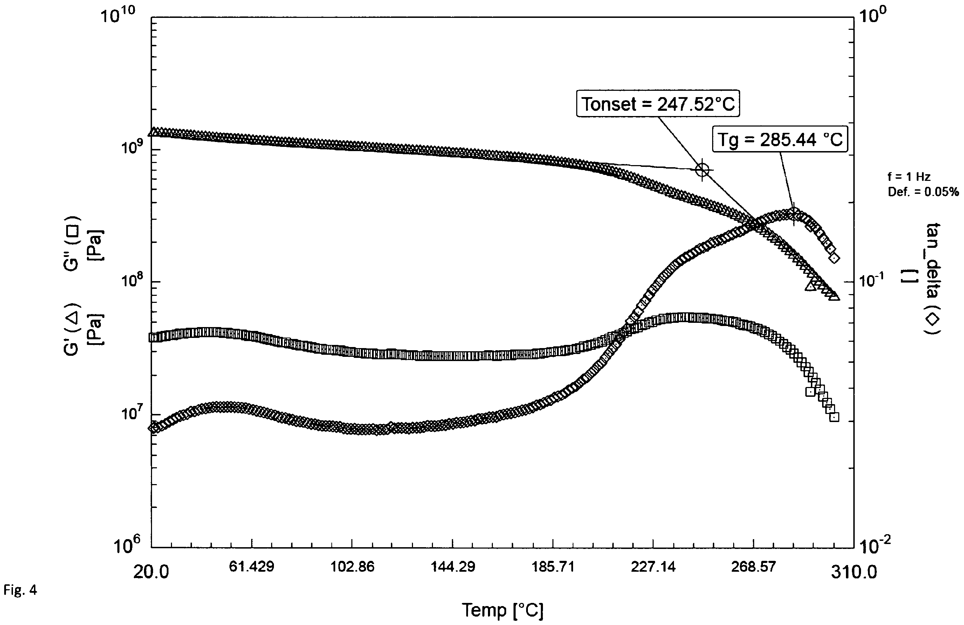

Die Ergebnisse der Zusammensetzungen PT15/HP4710/PEI = (1/0.5)/0.03 und PT15/HP4710/PES = (1/0.5)/0.03 sind auch in den Fig. 1 und 4 dargestellt.

Die Ergebnisse zeigen, dass das ausgehärtete Duromer eine Glasübergangstemperatur von 285 °C bis 300 ° C aufweist.

### b) Darstellung im Lösungsmittel

In einem 500 mL Rundkolben wurde Primaset ®PT15, Epiclon HP-4710 (mCE/mEpoxid = 1/0.5) und der entsprechende Anteil (3 Gew.-% und 7 Gew.-% bezogen auf die Gesamtmasse an Primaset PT-15 und Epiclon HP-4710) des entsprechenden Hochleistungsthermoplasten Polyetherimid (PEI) bzw. Polyethersulfon (PES) eingewogen und im entsprechenden Lösungsmittel (PES = THF; PEI = DCM) gelöst, sodass eine Lösung mit einer Konzentration von 3 g/mL (Gesamtmasse der Harzmischung auf mL Lösungsmittel) resultierte. Das Lösungsmittel wurde anschließend im Vakuum entfernt und die homogene Mischung im Vakuum bei 80°C für 3 Stunden entgast. Nachdem die Mischung auf Raumtemperatur abgekühlt war, wurde 1 Gew.-% des entsprechenden Diaminhärters (6-Methyl-2,4-bis(methylthio)phenylen-l,3-diamin) zugegeben, die Mischung auf 65°C erwärmt und im Vakuum für weitere 2 Stunden entgast. Anschließend wurde die noch heiße Reaktionsmischung in eine auf 70°C erwärmte Aluminiumform gegossen und mit folgendem Härtungszyklus im Umluftofen ausgehärtet:
1. 70°C bis 150°C (Rampe = 2 K/min)
2. 150°C 3h isotherm
3. 150°C bis 30°C (Rampe = 3 K/min)
4. Nachhärten: 220°C für 4h

Der Aushärtegrad wurde anschließend mittels DSC (5 K/min) bestimmt und betrug durchschnittlich 98%.

Die gleichen Tests wurden mit verschiedenen Diaminhärtern (Diethylmethylbenzoldiamin, 2-Methyl-4,6-bis(methylthio)phenylen-1,3-diamin, N,N'-Bis(sec-butylamino)diphenylmethane) durchgeführt. Dabei wurde festgstellt, dass die getesteten Diaminhärter eine ähnliche Reaktivität aufwiesen wie 6-Methyl-2,4-bis(methylthio)phenylen-1,3-diamin. Es ist daher möglich die Materialien mit allen getesteten Diaminen darzustellen.

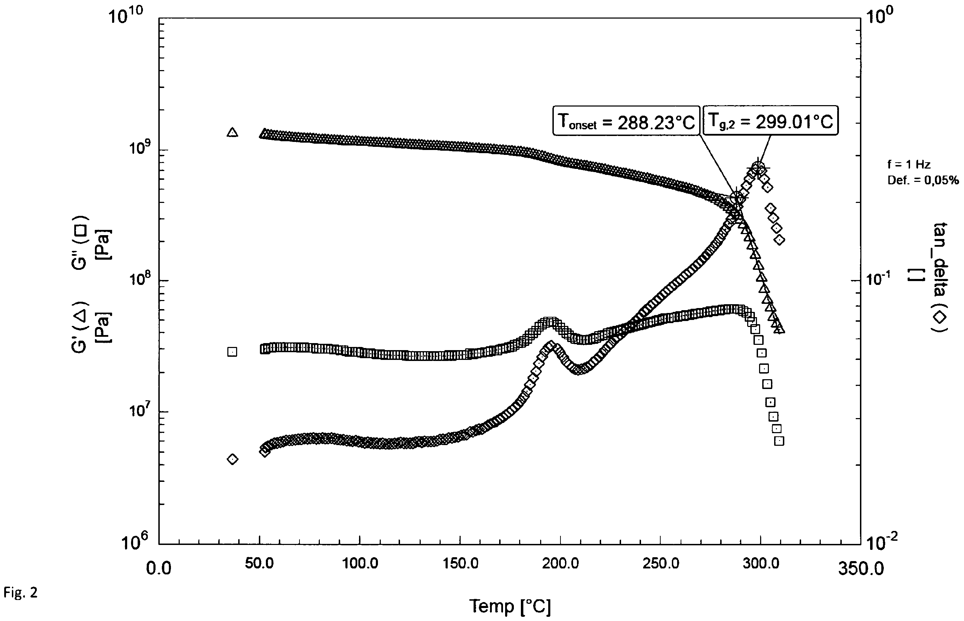

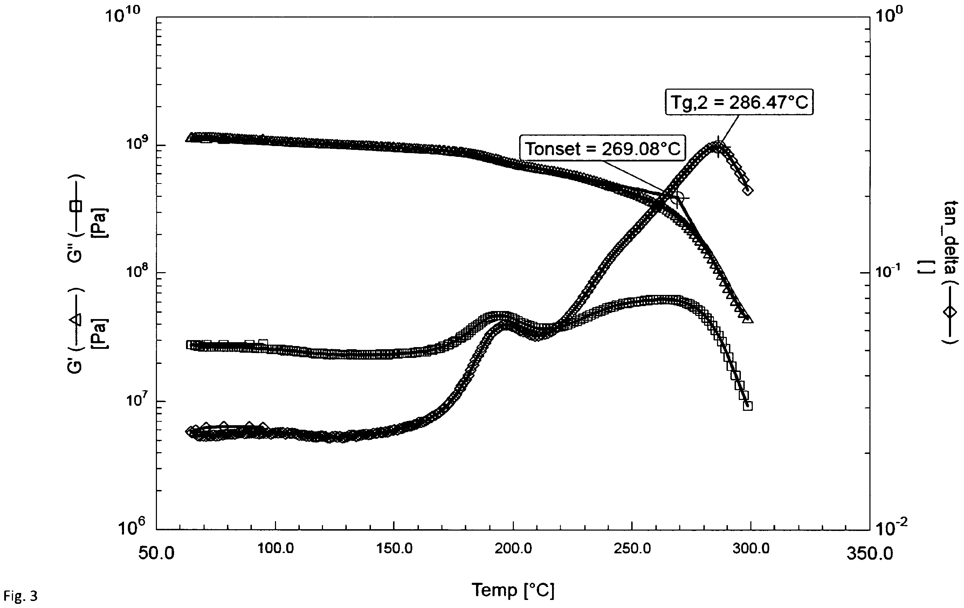

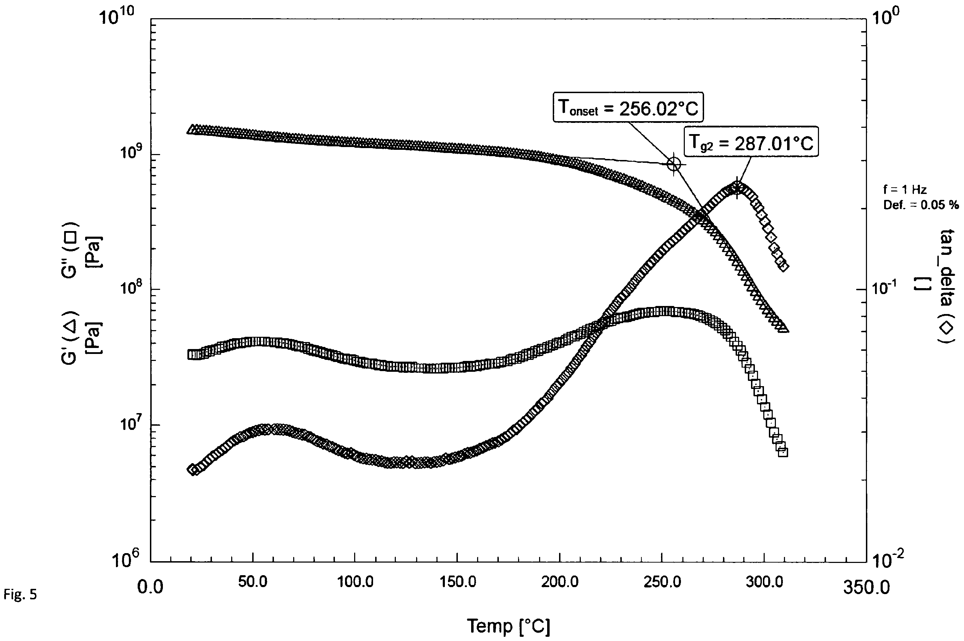

Die Ergebnisse der Zusammensetzungen PT15/HP4710/PEI = (1/0.5)/0.07; PT15/HP4710/PEI = (1/0.5)/0.1 und PT15/HP4710/PES = (1/0.5)/0.07 sind auch in den Fig. 2, 3 und 5 dargestellt.

Die Ergebnisse zeigen, dass das ausgehärtete Duromer eine Glasübergangstemperatur von 285 °C bis 300 ° C aufweist. FT-IR Charakterisierung

Die Charakterisierung der ungehärteten Zusammensetzung PT15/HP4710/PEI [(1/0.5)/0.03] ist in Tabelle 1 beschrieben:

**Tabelle 1**

| **v/cm⁻¹** | **Zuordnung** |
|---|---|
| ∼3050 | CH₂-VS (Epoxy) |
| 3339.54 | NH-VS |
| 2926.07 | CH₃/CH₂-VS |
| 2260.53 / 2234.42 | O-CΞN |
| 1623.72 | NH₂-DS |
| 1498.37 | Arom. Ring Oszillation |
| ∼1184.76 / 911.03 / 804.55 | Epoxy Oszillation |

Die Charakterisierung der gehärteten Zusammensetzung PT15/HP4710/PEI [(1/0.5)/0.03] ist in Tabelle 2 beschrieben:

**Tabelle 2**

| **v**/**cm⁻¹** | **Zuordnung** |
|---|---|
| 3339.54 | NH-VS |
| 2925.31 | CH₃/CH₂-VS |
| 1698.95 | C=O-VS (Oxazolidinone) |
| 1562.05 | N-C=N (Triazine) |
| 1503.18 | Arom. Ring Oszillation |
| 1365.58 | N-C-N (Triazin) |

In den Tabellen 1 und 2 ist gezeigt, dass das gehärtete Duromer aus der ungehärteten Zusammensetzung PT15/HP4710/PEI [(1/0.5)/0.03] hergestellt werden konnte.

## Patentansprüche

1. Polymerisierbare Duromer-Zusammensetzung, umfassend
a) ein di- oder polyfunktionelles organisches Cyanatesterharz der Formel (I): 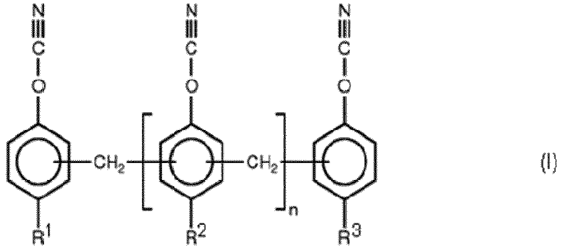 wobei R¹, R² und R³ unabhängig voneinander Wasserstoff oder C₁-C₁₀-Alkyl sind und n eine ganze Zahl von 0 bis 20 darstellt
b) ein naphthalin-basiertes Epoxidharz, und
c) mindestens ein aromatisches Diamin.

2. Polymerisierbare Duromer-Zusammensetzung gemäß Anspruch 1, wobei das di- oder polyfunktionelle organische Cyanatesterharz ein Cyanat der Formel (I) ist: 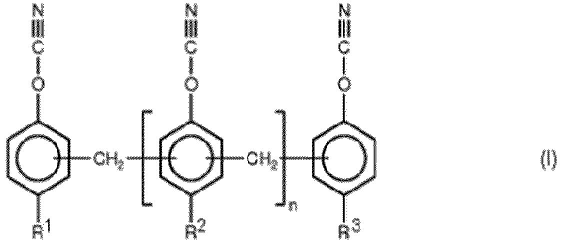 wobei R¹, R² und R³ Wasserstoff sind und n eine ganze Zahl von 0 bis 20 darstellt.

3. Polymerisierbare Duromer-Zusammensetzung gemäß einem der vorherigen Ansprüche, wobei das naphthalin-basierte Epoxidharz ein polymeres naphthalin-basiertes Epoxidharz darstellt.

4. Polymerisierbare Duromer-Zusammensetzung gemäß einem der vorherigen Ansprüche, wobei das naphthalin-basierte Epoxidharz ein naphthalin-basiertes Epoxidharz der Formel (II) ist: 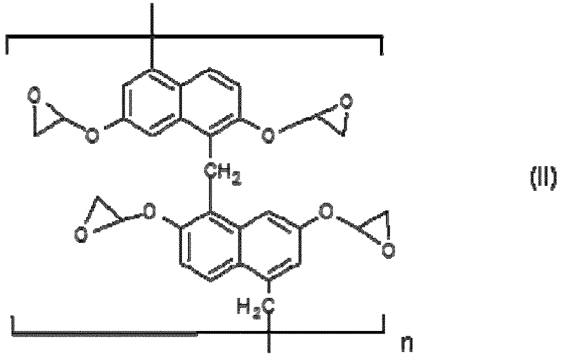 wobei n eine ganze Zahl von 1 bis 50 darstellt.

5. Polymerisierbare Duromer-Zusammensetzung gemäß einem der vorherigen Ansprüche, wobei die polymerisierbare Duromer-Zusammensetzung das di- oder polyfunktionelle organische Cyanatesterharz und das naphthalin-basierte Epoxidharz in einem Gewichtsverhältnis (Gew./Gew.) von 10:1 bis 1:1 enthält.

6. Polymerisierbare Duromer-Zusammensetzung gemäß einem der vorherigen Ansprüche, wobei das mindestens eine aromatische Diamin ein aromatisches Diamin ausgewählt aus der Gruppe umfassend 2,4-Toluylen-diamin, 2,6-Toluylen-diamin, 3,5-Diethyl-2,4-toluylen-diamin, 3,5-Diethyl-2,6-toluylendiamin und primäre mono-, di-, tri- oder tetraalkylsubstituierte 4,4'-Diaminodiphenylmethane, 6-Methyl-2,4-bis(methylthio)phenylen-1,3-diamin und 2-Methyl-4,6-bis(methylthio)phenylen-1,3-diamin darstellt.

7. Polymerisierbare Duromer-Zusammensetzung gemäß einem der vorherigen Ansprüche, wobei die polymerisierbare Duromer-Zusammensetzung das di- oder polyfunktionelle organische Cyanatesterharz und das aromatische Diamin in einem Gewichtsverhältnis (Gew./Gew.) von 150:1 bis 50:1 enthält.

8. Polymerisierbare Duromer-Zusammensetzung gemäß einem der vorherigen Ansprüche, wobei die polymerisierbare Duromer-Zusammensetzung mindestens ein Hochleistungsthermoplast umfasst, vorzugsweise mindestens ein Hochleistungsthermoplast, das ausgewählt ist aus der Gruppe umfassend Polysulfone (PSU), beispielsweise Polyethersulfone (PES) und Polyphenylensulfone (PPSU), Polyetherimid (PEI), Polysulfon (PSU, Polycarbonat (PC)und Mischungen hiervon.

9. Polymerisierbare Duromer-Zusammensetzung gemäß Anspruch 8, wobei die polymerisierbare Duromer-Zusammensetzung das di- oder polyfunktionelle organische Cyanatesterharz und das mindestens eine Hochleistungsthermoplast in einem Gewichtsverhältnis (Gew./Gew.) von 100:1 bis 6:1 enthält und/oder die polymerisierbare Duromer-Zusammensetzung das naphthalin-basierte Epoxidharz und das mindestens eine Hochleistungsthermoplast in einem Gewichtsverhältnis (Gew./Gew.) von 50:1 bis 3:1 enthält.

10. Polymerisiertes Duromer, das ein Reaktionsprodukt der polymerisierbaren Duromer-Zusammensetzung nach einem der Ansprüche 1 bis 9 darstellt.

11. Polymerisiertes Duromer gemäß Anspruch 10, wobei das Duromer eine Glasübergangstemperatur von 285 °C bis 300 °C aufweist und/oder eine Aushärtetemperatur in einem Bereich von 100 bis 180 °C, wobei die Glasübergangstemperatur mit Hilfe des Rheometers "Advanced Rheometric Expansion System" der Firma Rheometric Scientific und der Software "Rheometric Scientific, Version V6.5.8" mit einer Heizrate von 3K/min bestimmt wird, wobei der Glasübergang dem Maximum der tan(δ)-Funktion entspricht.

12. Verfahren zur Herstellung eines polymerisierten Duromers gemäß Anspruch 10 oder 11, umfassend die Schritte
i) Bereitstellung einer polymerisierbaren Duromer-Zusammensetzung gemäß einem der Ansprüche 1 bis 9,
ii) Polymerisation der polymerisierbaren Duromer-Zusammensetzung bei Temperaturen in einem Bereich von 100 bis 180 °C.

13. Verwendung der polymerisierbaren Duromer-Zusammensetzung nach einem der Ansprüche 1 bis 9 zur Herstellung von konstruktiven Leichtbauteilen, vorzugsweise Kohlefaser-Verbundwerkstoffe (CFK).

14. Konstruktives Leichtbauteil, vorzugsweise Kohlefaser-Verbundwerkstoff (CFK), enthaltend das polymerisierte Duromer gemäß Anspruch 10 oder 11.

## Claims

1. Polymerizable thermoset composition comprising
a) a di- or polyfunctional organic cyanate ester resin of the formula (I): 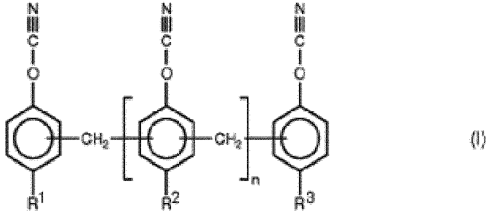 where R¹, R² and R³ are independently hydrogen or C₁-C₁₀-alkyl and n represents an integer from 0 to 20,
b) a naphthalene-based epoxy resin, and
c) at least one aromatic diamine.

2. Polymerizable thermoset composition according to Claim 1, wherein the di- or polyfunctional organic cyanate ester resin is a cyanate of the formula (I): 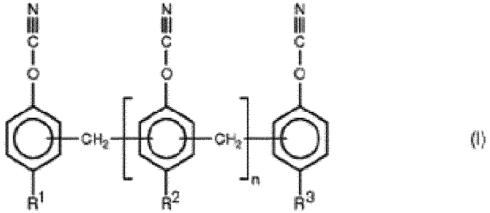 where R¹, R² and R³ are hydrogen and n represents an integer from 0 to 20.

3. Polymerizable thermoset composition according to either of the preceding claims, wherein the naphthalene-based epoxy resin is a polymeric naphthalene-based epoxy resin.

4. Polymerizable thermoset composition according to any of the preceding claims, wherein the naphthalene-based epoxy resin is a naphthalene-based epoxy resin of the formula (II): 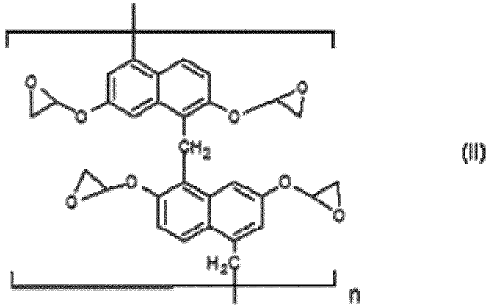 where n represents an integer from 1 to 50.

5. Polymerizable thermoset composition according to any of the preceding claims, wherein the polymerizable thermoset composition contains the di- or polyfunctional organic cyanate ester resin and the naphthalene-based epoxy resin in a weight ratio (w/w) of 10:1 to 1:1.

6. Polymerizable thermoset composition according to any of the preceding claims, wherein the at least one aromatic diamine is an aromatic diamine selected from the group comprising tolylene-2,4-diamine, tolylene-2,6-diamine, 3,5-diethyltolylene-2,4-diamine, 3,5-diethyltolylene-2,6-diamine and primary mono-, di-, tri- or tetraalkyl-substituted 4,4'-diaminodiphenyl-methanes, 6-methyl-2,4-bis(methylthio)phenylene-1,3-diamine and 2-methyl-4,6-bis(methylthio)phenylene-1,3-diamine.

7. Polymerizable thermoset composition according to any of the preceding claims, wherein the polymerizable thermoset composition contains the di- or polyfunctional organic cyanate ester resin and the aromatic diamine in a weight ratio (w/w) of 150:1 to 50:1.

8. Polymerizable thermoset composition according to any of the preceding claims, wherein the polymerizable thermoset composition comprises at least one high-performance thermoplastic, preferably at least one high-performance thermoplastic selected from the group comprising polysulfones (PSU), for example polyethersulfones (PES) and polyphenylenesulfones (PPSU), polyetherimide (PEI), polysulfone (PSU), polycarbonate (PC) and mixtures thereof.

9. Polymerizable thermoset composition according to Claim 8, wherein the polymerizable thermoset composition contains the di- or polyfunctional organic cyanate ester resin and the at least one high-performance thermoplastic in a weight ratio (w/w) of 100:1 to 6:1 and/or the polymerizable thermoset composition contains the naphthalene-based epoxy resin and the at least one high-performance thermoplastic in a weight ratio (w/w) of 50:1 to 3:1.

10. Polymerized thermoset which is a reaction product of the polymerizable thermoset composition according to any of Claims 1 to 9.

11. Polymerized thermoset according to Claim 10, wherein the thermoset has a glass transition temperature of 285°C to 300°C and/or a curing temperature within a range from 100 to 180°C, wherein the glass transition temperature is determined with the aid of the "Advanced Rheometric Expansion System" rheometer from Rheometric Scientific and the "Rheometric Scientific, Version V6.5.8" software at a heating rate of 3 K/min, where the glass transition corresponds to the maximum of the tan(δ) function.

12. Process for preparing a polymerized thermoset according to Claim 10 or 11, comprising the steps of
i) providing a polymerizable thermoset composition according to any of Claims 1 to 9,
ii) polymerizing the polymerizable thermoset composition at temperatures within a range from 100 to 180°C.

13. Use of the polymerizable thermoset composition according to any of Claims 1 to 9 for production of lightweight construction components, preferably carbon fibre composites (CFCs).

14. Lightweight construction component, preferably carbon fibre composite (CFC), containing the polymerized thermoset according to Claim 10 or 11.

## Revendications

1. Composition de duromère polymérisable, comprenant
a) une résine d'ester de cyanate organique difonctionnelle ou polyfonctionnelle de formule (I) : 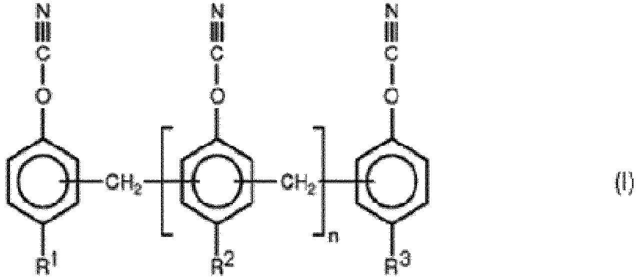 R¹, R² et R³ étant indépendamment les uns des autres hydrogène ou C₁₋₁₀-alkyle et n représentant un nombre entier de 0 à 20
b) une résine époxy à base de naphtalène, et
c) au moins une diamine aromatique.

2. Composition de duromère polymérisable selon la revendication 1, la résine d'ester de cyanate organique difonctionnelle ou polyfonctionnelle étant un cyanate de formule (I) : 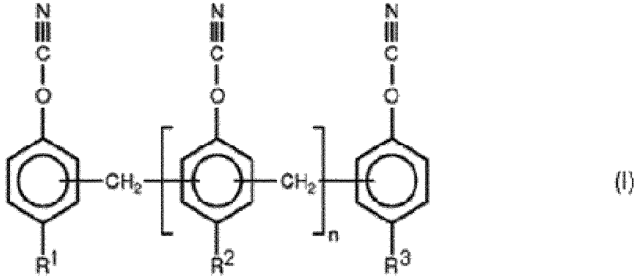 R¹, R² et R³ étant hydrogène et n représentant un nombre entier de 0 à 20.

3. Composition de duromère polymérisable selon l'une quelconque des revendications précédentes, la résine époxy à base de naphtalène représentant une résine époxy à base de naphtalène polymérique.

4. Composition de duromère polymérisable selon l'une quelconque des revendications précédentes, la résine époxy à base de naphtalène étant une résine époxy à base de naphtalène de formule (II) : 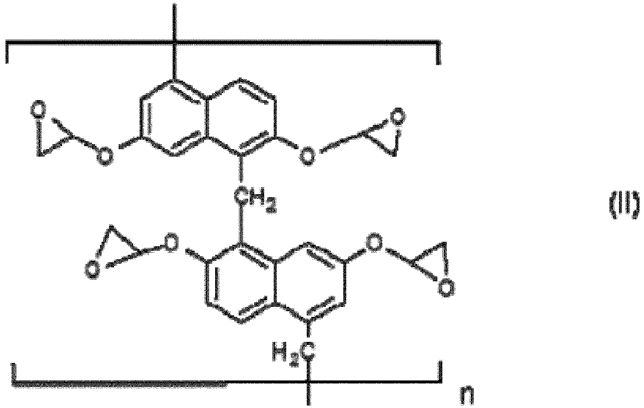 n représentant un nombre entier de 1 à 50.

5. Composition de duromère polymérisable selon l'une quelconque des revendications précédentes, la composition de duromère polymérisable contenant la résine d'ester de cyanate organique difonctionnelle ou polyfonctionnelle et la résine époxy à base de naphtalène en un rapport pondéral (poids/poids) de 10:1 à 1:1.

6. Composition de duromère polymérisable selon l'une quelconque des revendications précédentes, l'au moins une diamine aromatique représentant une diamine aromatique choisie dans le groupe comprenant la 2,4-toluylène-diamine, la 2,6-toluylène-diamine, la 3,5-diéthyl-2,4-toluylène-diamine, la 3,5-diéthyl-2,6-toluylènediamine et des 4,4'-diaminodiphénylméthanes primaires substitués par monoalkyle, dialkyle, trialkyle ou tétraalkyle, la 6-méthyl-2,4-bis(méthylthio)phénylène-1,3-diamine et la 2-méthyl-4, 6-bis (méthylthio)phénylène-1,3-diamine.

7. Composition de duromère polymérisable selon l'une quelconque des revendications précédentes, la composition de duromère polymérisable contenant la résine d'ester de cyanate organique difonctionnelle ou polyfonctionnelle et la diamine aromatique en un rapport pondéral (poids/poids) de 150:1 à 50:1.

8. Composition de duromère polymérisable selon l'une quelconque des revendications précédentes, la composition de duromère polymérisable comprenant au moins un thermoplastique à haute performance, de préférence au moins un thermoplastique à haute performance qui est choisi dans le groupe comprenant les polysulfones (PSU), par exemple les polyéthersulfones (PES) et les polyphénylènesulfones (PPSU), un polyétherimide (PEI), une polysulfones (PSU), un polycarbonate (PC) et des mélanges correspondants.

9. Composition de duromère polymérisable selon la revendication 8, la composition de duromère polymérisable contenant la résine d'ester de cyanate organique difonctionnelle ou polyfonctionnelle et l'au moins un thermoplastique à haute performance en un rapport pondéral (poids/poids) de 100:1 à 6:1 et/ou la composition de duromère polymérisable contenant la résine époxy à base de naphtalène et l'au moins un thermoplastique haute performance en un rapport pondéral (poids/poids) de 50:1 à 3:1.

10. Duromère polymérisé, qui représente un produit de réaction de la composition de duromère polymérisable selon l'une quelconque des revendications 1 à 9.

11. Duromère polymérisé selon la revendication 10, le duromère présentant une température de transition vitreuse de 285 °C à 300 °C et/ou une température de durcissement dans une plage de 100 à 180 °C, la température de transition vitreuse étant déterminée à l'aide du rhéomètre « Advanced Rheometric Expansion System » de la société Rheometric Scientific et du logiciel « Rheometric Scientific, Version V6.5.8 » avec une vitesse de chauffage de 3 K/min, la transition vitreuse correspondant au maximum de la fonction tan(δ).

12. Procédé pour la préparation d'un duromère polymérisé selon la revendication 10 ou 11, comprenant les étapes de
i) mise à disposition d'une composition de duromère polymérisable selon l'une quelconque des revendications 1 à 9,
ii) polymérisation de la composition de duromère polymérisable à des températures dans une plage de 100 à 180 °C.

13. Utilisation de la composition de duromère polymérisable selon l'une quelconque des revendications 1 à 9 pour la préparation d'éléments de construction légers, de préférence de matériaux composites de fibres de carbone (CFK).

14. Élément de construction léger, de préférence matériau composite de fibres de carbone (CFK), contenant le duromère polymérisé selon la revendication 10 ou 11.
